# EUROPÄISCHE PATENTSCHRIFT

(11) **EP 1 448 416 B1**
(45) Veröffentlichungstag und Bekanntmachung des Hinweises auf die Patenterteilung: **10.05.2006**
(21) Anmeldenummer: 02803363.7
(22) Anmeldetag: 12.11.2002
(51) Int. Cl.: B60T 8/00, G01C 21/28

(54) **FAHRZEUGDATENBUSSYSTEM MIT SENSORMODUL**
VEHICLE DATA BUS SYSTEM COMPRISING A SENSOR MODULE
SYSTEME DE BUS DE DONNEES DE VEHICULE COMPRENANT UN MODULE DE DETECTION

(30) Priorität: 22.11.2001 DE 10157377
(43) Veröffentlichungstag der Anmeldung: 25.08.2004
(73) Patentinhaber: DaimlerChrysler AG, 70567 Stuttgart (DE)
(72) Erfinder: HIEMER, Peter, 72631 Aichtal (DE); KEPPLER, Martin, 72160 Horb (DE)
(86) Internationale Anmeldenummer: PCT/EP2002/012605
(87) Internationale Veröffentlichungsnummer: WO 2003/043862

(56) Entgegenhaltungen:
- EP-A- 0 940 654
- EP-A- 1 258 408
- WO-A-01/20575
- DE-A- 4 228 893
- DE-A- 10 008 550
- DE-A- 10 014 994
- DE-A- 19 625 058
- DE-A- 19 910 868
- DE-A- 19 921 692

## Beschreibung

Die Erfindung betrifft ein Fahrzeugdatenbussystem mit Sensormodul gemäß dem Oberbegriff der Ansprüche 1 und 2.

Aus der WO 99/47889 ist ein Sensormodul mit Datenbusanschluss bekannt. In dem Sensormodul werden mindestens zwei Sensoren zur Erfassung von Fahrzeugbewegungen des Fahrzeugs und eine Auswerteeinheit zur Vorverarbeitung und Offsetkorrektur der Sensordatensignale räumlich in einem Sensormodul zusammengefasst. Die Sensoren sind Längsbeschleunigungssensoren, Querbeschleunigungssensoren und/oder Drehratensensoren. Die Sensordaten werden vom Sensormodul Fahrdynamik-/Radschlupfregelsystemen, Bremsregelsystemen, Lenkregelsystemen, Fahrwerkregelsystemen und Motormanagementregelsystemen zur Verfügung gestellt. Das Sensormodul gibt Drehratensensordaten in Form von Drehwinkeldaten, Drehwinkelgeschwindigkeitsdaten, Drehwinkelbeschleunigungsdaten auf einen CAN-Datenbus (CAN: Controller Area Network) aus. In der Auswerteeinheit des Sensormoduls wird die Vorverarbeitung der Sensordatensignale durchgeführt, die eine Überabtastung, Integration und Filterung umfasst. In der Auswerteeinheit des Sensormoduls werden außerdem durch Temperatureinflüsse bedingte Effekte kompensiert. Eine vergleichbare Anordnung ist aus der DE 42 28 893 A1 bekannt.

In der DE 199 44 177 A1 ist ein Fahrzeugdatenbussystem mit einem Ortungsmodul als Busteilnehmer bekannt. Das Ortungsmodul umfasst dabei zumindest einen GPS-Empfänger und Auswertemittel. Das Ortungsmodul ist darauf eingerichtet, Drehratendaten über den Datenbus von einem Fahrdynamik-/Radschlupfregelsystem zu empfangen und Ortungsdaten zu gewinnen. Das Ortungsmodul ist weiter in der Lage, gewonnene Ortungsdaten auf den Datenbus auszugeben.

Die DE 100 08 550 A1 und die EP 940 654 A1 offenbaren Fahrzeugdatenbussysteme mit einem Datenbus, einem als Busteilnehmer ausgebildeten Sensormodul mit einem Drehratensensor und einem als Busteilnehmer ausgebildeten Fahrdynamik-/Radschlupfregelsystem, das zum Empfangen von offsetkorrigierten Drehratendaten über den Datenbus ausgebildet ist. Die WO 01/20575 A1 zeigt darüber hinaus ein Ortungsmodul mit Mitteln zum busseitigen Empfang von Gyrodaten eines Fahrdynamik-/Radschlupfregelsystems.

Aufgabe der Erfindung ist es, ein Fahrzeugdatenbussystem der eingangs genannten Art zu schaffen, das vergleichsweise vielfältig und flexibel nutzbare Drehratendaten zur Verfügung stellt.

Die Erfindung löst diese Aufgabe durch die Bereitstellung eines Fahrzeugdatenbussystems mit den Merkmalen der Ansprüche 1 und 2. Die abhängigen Ansprüche betreffen vorteilhafte Aus- und Weiterbildungen der Erfindung.

Das Fahrzeugdatenbussystem weist als miteinander in Datenübertragungsverbindung stehende Busteilnehmer zumindest ein Fahrdynamik-/Radschlupfregelsystem, ein Sensormodul und einen weiteren Busteilnehmer auf. Das Sensormodul umfasst zumindest einen Drehratensensor und eine Einheit zur Vorverarbeitung der Drehratensensorsignale. Die Vorverarbeitung der Drehratensensorsignale umfasst z. B. eine Abtastung der Signale, eine Mittelung und/oder Integration, eine Tiefpassfilterung. Die Abtastung erfolgt vorteilhafterweise als Überabtastung im Verhältnis zur Übertragungsrate des Datenbusses. Der verwendete Datenbus kann z. B. ein CAN-Bus sein, der Navigationssystem, Fahrdynamik-/Radschlupfregelsysteme, Bremsregelsysteme, Lenkregelsysteme, Fahrwerkregelsysteme und/oder Motormanagementregelsysteme und weitere Busteilnehmer untereinander verbindet.

Erfindungsgemäß werden die vorverarbeiteten Drehratendaten vom Sensormodul auf den Datenbus ausgegeben. Das Fahrdynamik-/Radschlupfregelsystem empfängt die vorverarbeiteten Drehratendaten über den Datenbus und führt selbst eine Offsetkorrektur der z. B. temperaturbedingten Nullpunktverschiebung der Sensordaten durch. Das Fahrdynamik-/Radschlupfregelsystem schätzt hierzu den Offset im Kurzzeitbereich unter Verwendung von weiteren Daten, z. B. Raddrehzahldaten mit Vorwärts-/Rückwärts-Fahrtrichtungsdaten und/oder Querbeschleunigungsdaten. Mindestens ein weiterer Busteilnehmer empfängt die vorverarbeiteten Drehratendaten über den Datenbus und führt eine Offsetkorrektur durch. Je nach Art des weiteren Busteilnehmers stehen dem weiteren Busteilnehmer u. U. Informationen zur Verfügung, die es ihm erlauben, ebenfalls eine Offsetkorrektur durchzuführen. Als Beispiel wäre eine Navigation zu nennen, die eine qualitativ hochwertige Offsetkorrektur im Langzeitbereich unter Verwendung einer digitalen Karte und/oder der zuletzt zurückgelegten Wegstrecke und/oder GPS durchführen kann. Dies erlaubt die Verwendung von Navigationssystemen mit bewährten Algorithmen, die in der Lage sind, selbst eine Offsetkorrektur durchzuführen. Diese Navigationssysteme können weiterhin mit ihren bewährten Algorithmen in Verbindung mit dem erfindungsgemäßen Fahrzeugdatenbussystem Verwendung finden.

Vorteilhafterweise ist das Fahrdynamik-/Radschlupfregelsystem in der Lage, durch Verwendung von über den Datenbus von den Radsensoren empfangenen Raddrehzahl und Vorwärts-/Rückwärts-Fahrtrichtungsdaten Radweginformationen zu berechnen und die Radweginformationen in Form von radindividuellen Radimpulszählern auf den Datenbus auszugeben. Radimpulse stehen für eine bestimmte zurückgelegte Wegstrecke. Für die einzelnen Räder wird die Anzahl der Radimpulse im Fahrdynamik-/Radschlupfregelsystem aufaddiert und die aufaddierte Summe in einer Datenbusnachricht übertragen, wobei bei Erreichen eines Maximalwertes ein zyklischer Überlauf des Wertes vorgenommen wird. Diese Art der Übertragung von Radweginformationen bietet besondere Vorteile, da bei Verlust einer Nachricht auf dem Datenbus mit Empfang der nächsten Nachricht trotzdem die Radweginformation vorliegt.

Wird bereits im Sensormodul die Offsetkorrektur durchgeführt, so kann das Fahrdynamik-/Radschlupfregelsystem und/oder der weitere Busteilnehmer auf bereits offsetkorrigierte Drehratendaten zugreifen. Eine vorteilhafte Realisierung der Offsetkorrektur im Sensormodul sieht vor, dass mittels der über den Datenbus empfangenen Raddrehzahldaten und/oder Vorwärts-/Rückwärts-Fahrtrichtungsdaten und/oder Querbeschleunigungsdaten im Fahrdynamik-/Radschlupfregelsystem der Offset berechnet wird und an den Datenbus übertragen wird. Das Sensormodul empfängt über den Datenbus die Offsetdaten. Im Sensormodul wird die Offsetkorrektur durchgeführt und offsetkorrigierte Drehratendaten auf den Datenbus ausgegeben.

Erfindungsgemäß ist im Fahrzeugdatenbussystem vorgesehen, dass das Fahrdynamik-/Radschlupfregelsystem und/oder der weitere Busteilnehmer die Offsetkorrektur durchführen. Auf diese Weise erreicht man die größtmögliche Flexibilität in der Ausführung des Systems und kann in der Ausgestaltung des Systems flexibel auf besondere Anforderungen der Busteilnehmer bezüglich Genauigkeit, Timing etc. der Drehratendaten reagieren.

Erfindungsgemäß ist das Fahrdynamik-/Radschlupfregelsystem über einen ersten Datenbus mit dem mindestens einen weiteren Busteilnehmer verbunden. Dieser erste Datenbus ist z. B. ein CAN Datenbus mit hoher Obertragungsrate, über den im Fahrzeug die Vernetzung der Fahrdynamik-/Radschlupfregelsysteme, Bremsregelsysteme, Lenkregelsysteme, Fahrwerkregelsysteme und/oder Motormanagementregelsysteme erfolgt. Die Verbindung zu dem Sensormodul besteht über einen zweiten Datenbus, der z. B. ausschließlich für die Verbindung zwischen Sensormodul und Fahrdynamik-/Radschlupfregelsystem vorgesehen sein kann.

Das Fahrdynamik-/Radschlupfregelsysteme ist dafür ausgebildet vorverarbeitete Drahratendaten über den zweiten Datenbus vom Sensormodul zu empfangen. Es ist weiter dafür ausgebildet, die offsetkorrigierten Drehratendaten auf den ersten Datenbus auszugeben. Ober den ersten Datenbus können dann die weiteren Busteilnehmer die offsetkorrigierten Drehratendaten empfangen.

Vorteilhafterweise ist das Fahrdynamik-/Radschlupfregelsystem in der Lage, durch Verwendung der über den ersten Datenbus empfangenen Raddrehzahl und Vorwärts-/Rückwärts-Fahrtrichtungsdaten Offsetdaten zu berechnen und bei über den zweiten Datenbus empfangenen offsetkorrigierten Drehratendaten die bloßen vorverarbeiteten Drehratendaten zu ermitteln und auf dem ersten Datenbus auszugeben.

Die Drehratendaten umfassen verschiedene Daten, die durch einfache oder mehrfache Integration oder Differentiation aus den Drehratendaten gewonnen werden können, also auch Drehwinkeldaten, Drehwinkelgeschwindigkeiten und/oder Drehwinkelbeschleunigungsdaten. Die Übertragung des Drehwinkels als der bereits aufintegrierten Drehrate über den Datenbus oder die Datenbusse bietet besondere Vorteile, da bei Verlust einer Nachricht auf dem Datenbus mit Empfang der nächsten Nachricht trotzdem der Drehwinkel des Fahrzeuges vorliegt. Bei bloßer Übertragung der Drehrate ergäbe sich ein Fehler, da die Änderung, die in der verlorenen Nachricht enthalten war, nicht berücksichtigt wird. Vorteilhafterweise wird die Drehrate zum Drehwinkel aufintegriert und in einer Datenbusnachricht übertragen, wobei ein zyklischer Überlauf des Integrators von 359,99° nach 0° bzw. umgekehrt, je nach Drehrichtung vorgenommen wird.

In einer vorteilhaften Ausbildung der Erfindung umfasst das Sensormodul zusätzlich zum Drehratensensor einen Längsbeschleunigungssensor und/oder einen Querbeschleunigungssensor. Die Sensordaten dieser Sensoren werden in dem Sensormodul analog zu den Sensordaten des Drehratensensors vorverarbeitet und auf den Datenbus ausgegeben.

Erfindungsgemäß ist der mindestens eine weitere Busteilnehmer ein Navigationssystem mit einer integrierten Ortungsfunktion oder ein separates Ortungsmodul. Es ist selbstverständlich auch möglich, das Navigationssystem und das Ortungsmodul als getrennte Busteilnehmer zu realisieren. Das Navigationssystem und/oder das Ortungsmodul führt eine Offsetkorrektur im Langzeitbereich unter Zuhilfenahme der digitalen Karte und/oder des zuletzt zurückgelegten Fahrweges und/oder GPS durch. Das Navigationssystem kann hierbei die aus den Drehratendaten des Sensormoduls mit der aus der digitalen Karte gewonnenen Fahrrichtung des Fahrzeugs abgleichen. Das Navigationssystem und/oder das Ortungsmodul können eine Offsetkorrektur im Langzeitbereich vornehmen, indem die aus den Drehratendaten des Sensormoduls gewonnene Fahrrichtung des Fahrzeugs mit dem zuletzt zurückgelegten Weg abgeglichen wird. Eine vorteilhafte Anwendung der Drehratendaten liegt in der Nutzung für die Koppelortung für Navigationszwecke.

Bevorzugte Ausführungsbeispiele der Erfindung werden anhand der zugehörigen Zeichnungen nachfolgend beschrieben. Es zeigen jeweils in schematischer Darstellung,
- **Fig. 1**: ein Fahrzeugdatenbussystem mit Sensormodul und
- **Fig. 2**: ein Fahrzeugdatenbussystem mit Sensormodul und zwei Datenbussen.

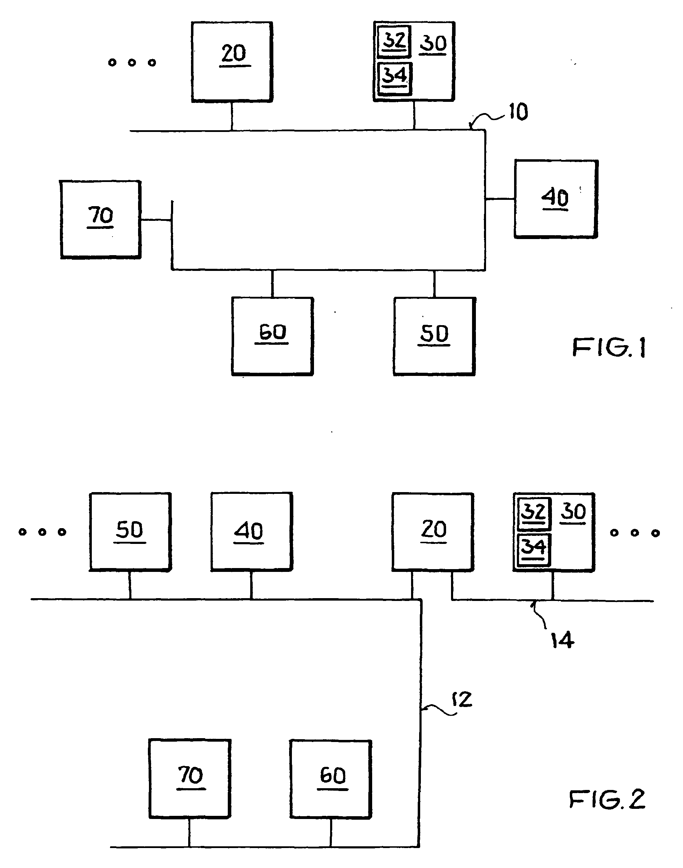

In Fig. 1 ist schematisch das Fahrzeugdatenbussystem mit dem Datenbus 10, dem Fahrdynamik-/Radschlupfregelsystem 20, dem Sensormodul 30 mit Drehratensensor 32 und Querbeschleunigungssensor 34, dem Ortungsmodul 40, dem Navigationsmodul 50, den Radsensoren 60 und dem Lenkwinkelsensor 70 dargestellt. Im Sensormodul 30 erfolgt eine Überabtastung des Drehratensensors 32, wobei die Abtastung als Überabtastung in Verhältnis zur Übertragungsrate des Datenbusses 10 zu verstehen ist. Danach erfolgt im Sensormodul 30 die Mittelung und Tiefpassfilterung des Signals des Drehratensensors 32. Hierdurch wird die Auflösung gesteigert und das mittelwertfreie Rauschen reduziert. Das so vorverarbeitete Drehratensignal wird auf den Datenbus 10 ausgegeben. Im Fahrdynamik-/Radschlupfregelsystem 20, im Ortungsmodul 40 und/oder im Navigationsmodul 50 erfolgt dann die Kompensation der temperaturpunktbedingten Nullpunktverschiebung des Drehratensensors, d. h. dort wird die Offsetkorrektur durchgeführt. Einer oder mehrere der Busteilnehmer Fahrdynamik-/Radschlupfregelsystem 20, Ortungsmodul 40 und/oder Navigationsmodul 50, die die Offsetkorrektur durchführen sind optional darauf eingerichtet, ihrerseits die offsetkorrigierten Drehratendaten auf den Datenbus 10 auszugeben.

Zusätzlich zu den vorverarbeiteten Daten ist das Sensormodul 30 in der Lage, selbst eine Offsetkorrektur durchzuführen. Hierfür wird im Fahrdynamik-/Radschlupfregelsystem 20 aus den über den Datenbus 10 empfangenen Radrehzahldaten und Vorwärts-/Rückwärts-Fahrtrichtungsdaten der Radsensoren 60 und/oder der über den Datenbus 10 empfangenen Lenkwinkeldaten des Lenkwinkelsensors 70 die Nullpunktverschiebung, d. h. der Offset, berechnet und über den Datenbus 10 an das Sensormodul 30 übertragen. Im Sensormodul 30 wird dann die Offsetkorrektur 30 durchgeführt und die offsetkorrigierten Drehratendaten werden vom Sensormodul 30 auf den Datenbus 10 ausgegeben.

Alternativ oder zusätzlich zur Ausgabe der offsetkorrigierten Drehratendaten kann das Fahrdynamik-/Radschlupfregelsystem 20 auch zum Drehwinkel aufintegrierte Drehraten auf den Datenbus 10 ausgeben. Hierfür wird die vorverarbeitete und offsetkorrigierte Drehrate aufintegriert und auf den Datenbus 10 ausgegeben, wobei der Integrationswert vom 359,99° nach 0° bzw. umgekehrt - je nach Drehrichtung des Fahrzeugs - überläuft. Der Drehwinkel entspricht dabei der relativen Fahrtrichtung, wie sie z. B. für Navigationszwecke zur Koppelortung Anwendung findet. Vorteilhafterweise wird die relative Fahrtrichtung in einer Botschaft gemeinsam mit den Raddrehzahldaten, die die Fahrtrichtung umfassen, und/oder den Radweginformationen und/oder dem Lenkwinkel übertragen.

In Fig. 2 ist schematisch ein weiteres Beispiel des Fahrzeugdatenbussystems mit dem ersten Datenbus 12 und dem zweiten Datenbus 14 dargestellt. Über den ersten Datenbus 12 steht das Fahrdynamik-/Radschlupfregelsystem 20 mit dem Ortungsmodul 40, dem Navigationsmodul 50, den Radsensoren 60 und dem Lenkwinkelsensor 70 in Datenübertragungsverbindung. Über den zweiten Datenbus 12 steht das Fahrdynamik-/Radschlupfregelsystem 20 mit dem Sensormodul 30 mit Drehratensensor 32 und Querbeschleunigungssensor 34 in Datenübertragungsverbindung.

Bei der Busarchitektur in Fig. 2 erfolgt im Sensormodul 30 eine Abtastung des Drehratensensors 32. Die Abtastung erfolgt als Überabtastung in Verhältnis zur Übertragungsrate des Datenbusses 14. Danach erfolgt im Sensormodul 30 die Mittelung und Tiefpassfilterung des Signals des Drehratensensors 32. Hierdurch wird die Auflösung gesteigert und das mittelwertfreie Rauschen reduziert. Das so vorverarbeitete Drehratensignal wird auf den Datenbus 14 ausgegeben. Das Fahrdynamik-/Radschlupfregelsystem 20 empfängt die vorverarbeiteten Drehratendaten über den Datenbus 14 und korrigiert der temperaturpunktbedingten Nullpunktverschiebung des Drehratensensors, d. h. die führt die Offsetkorrektur durch. Das Fahrdynamik-/Radschlupfregelsystem 20 ist optional darauf eingerichtet, seinerseits die offsetkorrigierten Drehratendaten auf den Datenbus 12 oder den Datenbus 14 auszugeben. Das Fahrdynamik-/Radschlupfregelsystem 20 kann alternativ oder zusätzlich auch die über den zweiten Datenbus 14 empfangenen vorverarbeiteten Drehratendaten auf den ersten Datenbus 12 ausgeben, so dass im Ortungsmodul 40 und/oder im Navigationsmodul 50 dann die Kompensation der temperaturpunktbedingten Nullpunktverschiebung des Drehratensensors, d. h. die Offsetkorrektur, erfolgen kann. Das Ortungsmodul 40 und/oder das Navigationsmodul 50 sind dann optional darauf eingerichtet, ihrerseits die offsetkorrigierten Drehratendaten auf den Datenbus 12 auszugeben.

Zusätzlich zu den vorverarbeiteten Daten ist das Sensormodul 30 in der Lage, selbst eine Offsetkorrektur durchzuführen. Hierfür wird im Fahrdynamik-/Radschlupfregelsystem 20 aus den über den Datenbus 12 empfangenen Radrehzahldaten und Vorwärts-/Rückwärts-Fahrtrichtungsdaten der Radsensoren 60 und/oder der über den Datenbus 12 empfangenen Lenkwinkeldaten des Lenkwinkelsensors 70 die Nullpunktverschiebung, d. h. der Offset, berechnet und über den Datenbus 14 an das Sensormodul 30 geschickt. Im Sensormodul 30 wird dann die Offsetkorrektur durchgeführt und die offsetkorrigierten Drehratendaten werden vom Sensormodul 30 auf den Datenbus 14 ausgegeben. In dieser Ausführungsform der Erfindung kann das Fahrdynamik-/Radschlupfregelsystem 20 die über den Datenbus 14 empfangenen offsetkorrigierten Drehratendaten auf den Datenbus 12 ausgeben und/oder unter Verwendung des Offsets die vorverarbeiteten Drehratendaten rekonstruieren und diese auf den Datenbus 12 ausgeben.

Alternativ oder zusätzlich zur Ausgabe der offsetkorrigierten Drehratendaten kann das Fahrdynamik-/Radschlupfregelsystem 20 auch zum Drehwinkel aufintegrierte Drehraten auf den Datenbus 12 ausgeben. Hierfür wird die vorverarbeitete und offsetkorrigierte Drehrate aufintegriert und auf den Datenbus 12 ausgegeben, wobei der Integrationswert von 359,99° nach 0° bzw. umgekehrt - je nach Drehrichtung des Fahrzeugs - überläuft. Der Drehwinkel entspricht dabei der relativen Fahrtrichtung, wie sie z. B. für Navigationszwecke zur Koppelortung Anwendung findet. Vorteilhafterweise wird die relative Fahrtrichtung in einer Botschaft gemeinsam mit den Raddrehzahldaten, die die Fahrtrichtung umfassen, und/oder den Radweginformationen und/oder dem Lenkwinkel übertragen.

Auch das Sensormodul 30 kann zum Drehwinkel aufintegrierte Drehraten auf den Datenbus 14 ausgeben. Der Überlauf erfolgt analog zur Berechnung im Fahrdynamik-/Radschlupfregelsystem 20. Vorteilhafterweise wird die relative Fahrtrichtung über den Datenbus 14 an das Fahrdynamik-/Radschlupfregelsystem 20 übertragen und von dort auf den Datenbus 12 ausgegeben. Die Botschaft hierfür umfasst vorteilhafterweise Raddrehzahldaten, die die Fahrtrichtung umfassen, und/oder die Radweginformationen und/oder den Lenkwinkel.

Die in Fig. 1 und Fig. 2 dargestellten Busarchitekturen sind als Beispiele zu verstehen. Es sind zur Realisierung der Erfindung ebenfalls verschiedene weitere Busarchitekturen denkbar. So können z. B. die Busteilnehmer über einen oder mehrere Busse, z. B. CAN (Controller Area Network) mit hoher Übertragungsgeschwindigkeit und/oder LIN, verbunden sein, alternativ oder zusätzlich dazu können z. B. CAN mit niedrigerer Übertragungsgeschwindigkeit, D2B (Domestic Digital Bus), MOST (Media Oriented Systems Transport) und/oder eine drahtlose Funkschnittstelle, wie Bluetooth, Verwendung finden. Die Verbindung der Busse untereinander erfolgt dann je nach Grad der Protokollumsetzung z. B. über einen Router, eine Bridge oder ein Gateway.

## Patentansprüche

1. Fahrzeugdatenbussystem mit einem oder mehreren Datenbussen (10, 12, 14), über die mehrere angeschlossene Busteilnehmer (20, 30, 40, 50, 60, 70) in Datenübertragungsverbindung stehen, einem als Busteilnehmer ausgebildeten Sensormodul (30) mit einem Drehratensensor (32) und einem als Busteilnehmer ausgebildeten Fahrdynamik-/Radschlupfregelsystem (20), wobei das Sensormodul (30) zum Durchführen einer Vorverarbeitung der Drehratendaten und zum Ausgeben der Drehratendaten auf den Datenbus (10, 14) eingerichtet ist, mindestens ein weiterer Busteilnehmer (40, 50) zum Empfang der Drehratendaten über den Datenbus (10, 12) ausgebildet ist und der mindestens eine weitere Busteilnehmer als Navigationsmodul (40) und/oder als Ortungsmodul (50) ausgebildet ist, **dadurch gekennzeichnet, dass** das Fahrdynamik-/Radschlupfregelsystem (20) zum Empfangen von Drehratendaten über den Datenbus (10, 14) und zum Empfangen von Raddrehzahldaten, zur Gewinnung von wenigstens offsetkorrigierten Drehratendaten und zum Ausgeben der offsetkorrigierten Drehratendaten auf den Datenbus (10, 14) eingerichtet ist, dass das Fahrdynamik-/Radschlupfregelsystem (20) über einen ersten Datenbus (12) mit wenigstens dem mindestens einen weiteren Busteilnehmer (40, 50) in Datenübertragungsverbindung steht und dass das Fahrdynamik-/Radschlupfregelsystem (20) über einen zweiten Datenbus (14) mit wenigstens dem Sensormodul (30) in Datenübertragungsverbindung steht, und dass das Fahrdynamik-/Radschlupfregelsystem (20) zum Empfangen der vorverarbeiteten Drehratendaten über den zweiten Datenbus (14) und zum Ausgeben der offsetkorrigierten Drehratendaten auf den ersten Datenbus (12) ausgebildet ist.

2. Fahrzeugdatenbussystem mit einem oder mehreren Datenbussen (10, 12, 14), über die mehrere angeschlossene Busteilnehmer (20, 30, 40, 50, 60, 70) in Datenübertragungsverbindung stehen, einem als Busteilnehmer ausgebildeten Sensormodul (30) mit einem Drehratensensor (32) und einem als Busteilnehmer ausgebildeten Fahrdynamik-/Radschlupfregelsystem (20), wobei das Sensormodul (30) zum Durchführen einer Vorverarbeitung der Drehratendaten und zum Ausgeben der Drehratendaten auf den Datenbus (10, 14) eingerichtet ist, mindestens ein weiterer Busteilnehmer (40, 50) zum Empfang der Drehratendaten über den Datenbus (10, 12) ausgebildet ist und der mindestens eine weitere Busteilnehmer als Navigationsmodul (40) und/oder als Ortungsmodul (50) ausgebildet ist, **dadurch gekennzeichnet, dass** das Fahrdynamik-/Radschlupfregelsystem (20) zum Empfangen von Drehratendaten über den Datenbus (10, 14) und zum Empfangen von Raddrehzahldaten, zur Gewinnung von wenigstens offsetkorrigierten Drehratendaten und zum Ausgeben der offsetkorrigierten Drehratendaten auf den Datenbus (10, 14) eingerichtet ist, dass das Fahrdynamik-/Radschlupfregelsystem (20) den Offset im Kurzzeitbereich abschätzt und dass das Navigationssystem und/oder das Ortungsmodul zusätzlich eine Offsetkorrektur im Langzeitbereich unter Zuhilfenahme der digitalen Karte und/oder des zuletzt zurückgelegten Fahrweges und/oder GPS durchführen.

3. Fahrzeugdatenbussystem nach einem der vorhergehenden Ansprüche, **dadurch gekennzeichnet, dass** die Vorverarbeitung der Drehratendaten die Überabtastung der Sensordaten, ihre Filterung und/oder ihre Mittelung umfasst.

4. Fahrzeugdatenbussystem nach Anspruch 1, **dadurch gekennzeichnet, dass** das Fahrdynamik-/Radschlupfregelsystem (20) zum Empfangen der Raddrehzahldaten über den ersten Datenbus (12) und zum Ausgeben der Offsetdaten über den zweiten Datenbus (14) ausgebildet ist.

5. Fahrzeugdatenbussystem nach einem der vorhergehenden Ansprüche, **dadurch gekennzeichnet, dass** die Drehratendaten Drehwinkeldaten und/oder Drehwinkelgeschwindigkeitsdaten und/oder Drehwinkelbeschleunigungsdaten umfassen.

6. Fahrzeugdatenbussystem nach einem der vorhergehenden Ansprüche, **dadurch gekennzeichnet, dass** eine Integration der Drehratendaten zu Drehwinkeldaten im Sensormodul und/oder im Navigationsmodul und/oder im Fahrdynamik-/Radschlupf-regelsystem erfolgt.

7. Fahrzeugdatenbussystem nach einem der vorhergehenden Ansprüche, **dadurch gekennzeichnet, dass** das Sensormodul (30) zusätzlich einen Längsbeschleunigungssensor und/oder einen Querbeschleunigungssensor (34) umfasst.

8. Fahrzeugdatenbussystem nach Anspruch 5 oder 6, **dadurch gekennzeichnet, dass** die Drehwinkeldaten in einer Datenbotschaft über den Datenbus übertragen werden, deren Wert in Abhängigkeit von der Drehrichtung des Fahrzeuges bei Erreichen eines Maximalwertes nach 0° oder von 0° zum Maximalwert wechselt.

## Claims

1. Vehicle data bus system having one or more data buses (10, 12, 14), via which a plurality of connected bus users (20, 30, 40, 50, 60, 70) are connected for data transmission, a sensor module (30) which is embodied as a bus user and has a rotational speed sensor (32) and a vehicle movement dynamics/wheel slip control system (20) which is embodied as a bus user, the sensor module (30) being configured to carry out preprocessing of the rotational speed data and to output the rotational speed data onto the data bus (10, 14), at least one further bus user (40, 50) being designed to receive the rotational speed data via the data bus (10, 12) and the at least one further bus user being embodied as a navigation module (40) and/or as a locating module (50), **characterized in that** the vehicle movement dynamics/wheel slip control system (20) is configured to receive rotational speed data via the data bus (10, 14) and to receive wheel speed data, to acquire at least offset-corrected rotational speed data and to output the offset-corrected rotational speed data onto the data bus (10, 14), **in that** the vehicle movement dynamics/wheel slip control system (20) is connected, for data transmission, to at least the at least one further bus user (40, 50) via a first data bus (12), and **in that** the vehicle movement dynamics/wheel slip control system (20) is connected, for data transmission, to at least the sensor module (30) via a second data bus (14), and **in that** the vehicle movement dynamics/wheel slip control system (20) is designed to receive the preprocessed rotational speed data via the second data bus (14) and to output the offset-corrected rotational speed data onto the first data bus (12).

2. Vehicle data bus system having one or more data buses (10, 12, 14), via which a plurality of connected bus users (20, 30, 40, 50, 60, 70) are connected for data transmission, a sensor module (30) which is embodied as a bus user and has a rotational speed sensor (32) and a vehicle movement dynamics/wheel slip control system (20) which is embodied as a bus user, the sensor module (30) being configured to carry out preprocessing of the rotational speed data and to output the rotational speed data onto the data bus (10, 14), at least one further bus user (40, 50) being designed to receive the rotational speed data via the data bus (10, 12) and the at least one further bus user being embodied as a navigation module (40) and/or as a locating module (50), **characterized in that** the vehicle movement dynamics/wheel slip control system (20) is configured to receive rotational speed data via the data bus (10, 14) and to receive wheel speed data, to acquire at least offset-corrected rotational speed data and to output the offset-corrected rotational speed data onto the data bus (10, 14), **in that** the vehicle movement dynamics/wheel slip control system (20) estimates the offset in the short-term range, and **in that** the navigation system and/or the locating module additionally carry out an offset correction in the long-term range using the digital map and/or the part of the route travelled along last and/or GPS.

3. Vehicle data bus system according to either of the preceding claims, **characterized in that** the preprocessing of the rotational speed data comprises oversampling the sensor data, filtering it and/or averaging it.

4. Vehicle data bus system according to Claim 1, **characterized in that** the vehicle movement dynamics/wheel slip control system (20) is designed to receive the wheel speed data via the first data bus (12), and to output the offset data via the second data bus (14).

5. Vehicle data bus system according to one of the preceding claims, **characterized in that** the rotational speed data comprises angle of rotation data and/or angle of rotation speed data and/or angle of rotation acceleration data.

6. Vehicle data bus system according to one of the preceding claims, **characterized in that** an integration of the rotational speed data to form angle of rotation data takes place in the sensor module and/or in the navigation module and/or in the vehicle movement dynamics/wheel slip control system.

7. Vehicle data bus system according to one of the preceding claims, **characterized in that** the sensor module (30) additionally comprises a longitudinal acceleration sensor and/or a transverse acceleration sensor (34).

8. Vehicle data bus system according to Claim 5 or 6, **characterized in that** the angle of rotation data is transmitted in a data message via the data bus, the value of which data changes to 0° or from 0° to the maximum value as a function of the direction of rotation of the vehicle when a maximum value is reached.

## Revendications

1. Système de bus de données pour véhicule comprenant un ou plusieurs bus de données (10, 12, 14) par le biais desquels plusieurs périphériques de bus connectés (20, 30, 40, 50, 60, 70) se trouvent en liaison de transmission de données, un module de détection (30) réalisé sous la forme d'un périphérique de bus et comprenant un capteur tachymétrique (32) et un système de régulation de la dynamique de conduite / du patinage des roues (20) réalisé sous la forme d'un périphérique de bus, le module de détection (30) étant réglé pour exécuter un prétraitement des données tachymétriques et pour délivrer les données tachymétriques sur le bus de données (10, 14), au moins un périphérique de bus supplémentaire (40, 50) étant configuré pour recevoir les données tachymétriques par le biais du bus de données (10, 12) et l'au moins un périphérique de bus supplémentaire étant réalisé sous la forme d'un module de navigation (40) et/ou d'un module de radiorepérage (50), **caractérisé en ce que** le système de régulation de la dynamique de conduite / du patinage des roues (20) est réglé pour recevoir les données tachymétriques par le biais du bus de données (10, 14) et pour recevoir des données de vitesse de rotation des roues, pour extraire les données tachymétriques au moins corrigées du point de vue de l'offset et pour délivrer les données tachymétriques corrigées du point de vue de l'offset sur le bus de données (10, 14), que le système de régulation de la dynamique de conduite / du patinage des roues (20) est en liaison de transmission de données par le biais d'un premier bus de données (12) avec l'au moins un périphérique de bus supplémentaire (40, 50) et que le système de régulation de la dynamique de conduite / du patinage des roues (20) est en liaison de transmission de données par le biais d'un deuxième bus de données (14) avec au moins le module de détection (30) et que le système de régulation de la dynamique de conduite / du patinage des roues (20) est configuré pour recevoir les données tachymétriques prétraitées par le biais du deuxième bus de données (14) et pour délivrer les données tachymétriques corrigées du point de vue de l'offset sur le premier bus de données (12).

2. Système de bus de données pour véhicule comprenant un ou plusieurs bus de données (10, 12, 14) par le biais desquels plusieurs périphériques de bus connectés (20, 30, 40, 50, 60, 70) se trouvent en liaison de transmission de données, un module de détection (30) réalisé sous la forme d'un périphérique de bus et comprenant un capteur tachymétrique (32) et un système de régulation de la dynamique de conduite / du patinage des roues (20) réalisé sous la forme d'un périphérique de bus, le module de détection (30) étant réglé pour exécuter un prétraitement des données tachymétriques et pour délivrer les données tachymétriques sur le bus de données (10, 14), au moins un périphérique de bus supplémentaire (40, 50) étant configuré pour recevoir les données tachymétriques par le biais du bus de données (10, 12) et l'au moins un périphérique de bus supplémentaire étant réalisé sous la forme d'un module de navigation (40) et/ou d'un module de radiorepérage (50), **caractérisé en ce que** le système de régulation de la dynamique de conduite / du patinage des roues (20) est réglé pour recevoir les données tachymétriques par le biais du bus de données (10, 14) et pour recevoir des données de vitesse de rotation des roues, pour extraire les données tachymétriques au moins corrigées du point de vue de l'offset et pour délivrer les données tachymétriques corrigées du point de vue de l'offset sur le bus de données (10, 14), que le système de régulation de la dynamique de conduite / du patinage des roues (20) évalue l'offset dans la plage du court terme et que le système de navigation et/ou le module de radiorepérage effectuent en plus une correction d'offset dans la plage du long terme à l'aide de la carte numérique et/ou du trajet parcouru en dernier et/ou du GPS.

3. Système de bus de données pour véhicule selon l'une des revendications précédentes, **caractérisé en ce que** le prétraitement des données tachymétriques comprend le suréchantillonnage des données du capteur, leur filtrage et/ou le calcul de leur moyenne.

4. Système de bus de données pour véhicule selon la revendication 1, **caractérisé en ce que** le système de régulation de la dynamique de conduite / du patinage des roues (20) est configuré pour recevoir les données de vitesse de rotation des roues par le biais du premier bus de données (12) et pour délivrer les données d'offset par le biais du deuxième bus de données (14).

5. Système de bus de données pour véhicule selon l'une des revendications précédentes, **caractérisé en ce que** les données tachymétriques comprennent des données d'angle de rotation et/ou des données de vitesse d'angle de rotation et/ou des données d'accélération d'angle de rotation.

6. Système de bus de données pour véhicule selon l'une des revendications précédentes, **caractérisé en ce qu'**une intégration des données tachymétriques en données d'angle de rotation est effectuée dans le module de détection et/ou dans le module de navigation et/ou dans le système de régulation de la dynamique de conduite / du patinage des roues.

7. Système de bus de données pour véhicule selon l'une des revendications précédentes, **caractérisé en ce que** le module de détection (30) comprend en plus un capteur d'accélération longitudinale et/ou un capteur d'accélération transversale (34).

8. Système de bus de données pour véhicule selon la revendication 5 ou 6, **caractérisé en ce que** les données d'angle de rotation sont transmises par le biais du bus de données dans un message de données dont la valeur varie en fonction du sens de rotation du véhicule, vers 0° lorsqu'une valeur maximale a été atteinte ou de 0° vers la valeur maximale.
